# EUROPEAN PATENT APPLICATION

(11) **EP 1 464 399 A2**
(43) Date of publication of application: **06.10.2004**
(21) Application number: 04008114.3
(22) Date of filing: 02.04.2004
(51) Int. Cl.: B01L 3/00, B01L 7/00, G01N 35/00, C12Q 1/68

(54) **Nucleic-acid amplifying apparatus and nucleic-acid amplifying method**

(30) Priority: 02.04.2003 JP 2003098744
(71) Applicant: Hitachi, Ltd., Chiyoda-ku, Tokyo 101-8010 (JP)
(72) Inventor: Takenaka, Kei, Hitachi, Ltd, 1-chome Chiyoda-ku Tokyo 100-8220 (JP); Nagaoka, Yoshihiro Hitachi, Ltd, 1-chome Chiyoda-ku Tokyo 100-8220 (JP); Watanabe, Naruo, Hitachi, Ltd, 1-chome Chiyoda-ku Tokyo 100-8220 (JP); Fukuzono, Shinichi, Hitachi High-Tech., 882, Ichige Hitachinaka-shi Ibaraki (JP); Yokobayashi, Toshiaki, Hitachi High-Tech., 882, Ichige Hitachinaka-shi Ibaraki (JP)
(74) Representative: Beetz & Partner Patentanwälte

(57) **Abstract**

The invention relates to a nucleic-acid amplifying apparatus comprising: a flow passage, through which a reaction fluid containing a sample containing a nucleic acid and a reagent flows, the flow passage including a flow passage branch portion (203; 206), at which the flow passage branches into a plurality of branch flow passages (204; 207), a junction portion (205; 208), at which the plurality of branch flow passages (204; 207) join, and a joined flow passage, through which the reaction fluid as joined is conducted, and a heating mechanism having a plurality of set temperature zones provided on the branch flow passages.

## Description

### Background Of The Invention

The present invention relates to a nucleic-acid amplifying apparatus provided with a mechanism that amplifies a nucleic acid in a specimen.

Methods of amplifying a very small amount of nucleic acid include a PCR method that is generally well-known. In this method, a short primer DNA is hybridized to respective complementary strands in a manner to interpose therebetween a particular region with double-strands DNA as a template, and when DNA Polymerase is caused to act on the primer DNA in the presence of four kinds of deoxynudeoside triphosphate being a substrate, nucleotide is added to distal ends of the primer according to base sequences of the template and chains are extended. The fundamentals of the PCR method reside in that two new DNA strands formed in the reaction are heated to be separated into complementary strands, and the primer existing in excess is again hybridized in relevant positions to synthesize new DNA strands in the DNA Polymerase reaction. Such reaction is repeated, and so it becomes possible to increase DNA fragments containing a target region in large quantities.

A heat-block type thermal cycler, in which a holder that contains a sample is directly heated and cooled to control temperature, is general as an apparatus that automatically performs the PCR method.

Meanwhile, there have been reported a method (referred below to as flow-through amplification method) of allowing a PCR reaction mixture to flow in a flow passage that passes through a plurality of temperature zones, whereby the PCR reaction mixture is subjected to temperature change required for the PCR amplifying reaction to amplify a nucleic acid, and an apparatus that realizes the method.

JP-A-6-30776 discloses a DNA amplification method and a DNA amplification apparatus as the flow-through amplification method and an apparatus that realizes the method. In the method, a necessary temperature change is given to a PCR reaction mixture and the PCR reaction is performed by having the PCR reaction mixture flowing in a single capillary (inside diameter: 0.5 mm, outside dimension: 1.5 mm, and length: 10 m or more).

Also, a nano-liter DNA analysis apparatus is shown in Science Magazine, Vol. 282, pages 484-487, 1998. The apparatus comprises a micro flow passage (a flow passage (width: 500 µm, depth: 50 µm, length: 1 cm or more) in a heating part) manufactured by the micro fabrication technique, a heater, a temperature sensor, and a fluorescence detector, and a PCR reaction mixture flows through a single micro flow passage that passes through different temperature zones, whereby the PCR reaction mixture is heated/cooled, nucleic-acid amplification is performed in PCR reaction, and fluorescence of the amplified nucleic acid is detected.

With the heat-block type thermal cycler, it takes time to heat and cool a block to target temperatures, so that the time required until the amplification reaction is terminated is lengthened. Also, lengthening of time elapsed until termination of the amplification reaction leads to deactivation of enzyme, which is responsible for reduction in quantity of amplification.

On the other hand, the flow-through amplification method requires changing the temperature of a PCR reaction mixture to a target temperature while the reaction mixture passes through the heating part. In order to increase the surface area per quantity of the PCR reaction mixture, a flow passage, through which the PCR reaction mixture flows, requires a length as compared with the cross sectional area. Therefore, in the case of having the PCR reaction mixture flowing through a single flow passage, the usable quantity of the PCR reaction mixture decreases. While the quantity of a PCR reaction mixture used in the heat-block type thermal cycler is generally 10 µl to 100 µl, the quantity of a PCR reaction mixture used in the DNA amplification apparatus disclosed in JP-A-6-30776 is 5 µl, and the quantity of a PCR reaction mixture used in the nanoliter DNA analysis apparatus described in Science Magazine, Vol. 282, pages 484-487, 1998, is 120 nl. When the quantity of a PCR reaction mixture is increased, however, the PCR reaction mixture spreads in the lengthwise direction of the flow passage. Therefore, since the reaction mixture flows across a plurality of temperature zones, the reaction mixture is made non-uniform in its temperature distribution and so the amplification reaction is not favorably performed.

Also, in the case of using a flow passage having a large diameter, the surface area per quantity of a PCR reaction mixture decreases, and the thermal efficiency is reduced, so that the time required for the amplification reaction is lengthened.

Further, with the conventional art described above, a single flow passage passes through a plurality of temperature zones, so that when a template nucleic acid, for which an appropriate PCR cycle is unknown, is to be amplified, a temperature cycle of the PCR must be beforehand investigated.

### Brief Summary Of The Invention

Hereupon, it is an object of the invention to provide a nucleic-acid amplifying apparatus that solves at least one of the problems in the conventional art described above.

The above problem is solved according to the independent claims. The dependent claims relate to preferred embodiments of the concept of the present invention.
(1) In order to solve the problems, the invention provides a nucleic-acid amplifying apparatus having a construction, in which a flow passage passing through a plurality of temperature zones and containing a reagent, of which a target nucleic acid is to be amplified, branches into flow passages.
   For example, there is provided a nucleic-acid amplifying apparatus comprising a flow passage, through which a reaction fluid containing a sample containing a nucleic acid and a reagent being mixed with the sample flows, a flow passage branch portion, at which the flow passage branches into a plurality of branch flow passages, a junction portion, at which the plurality of branch flow passages join, and a joined flow passage, through which the reaction fluid as joined is conducted, and wherein a heating mechanism having a plurality of set temperature zones is provided an the branch flow passages.
   Thereby, temperature can be changed at high speed and the heat quantity as received can be increased by increasing the surface area, so that it is possible to repeat the amplification temperatures in a short time while suppressing a gentle temperature distribution, thus enabling enhancing the efficiency of amplification.
(2) More preferably, the invention has the feature that the construction, in which a flow passage permitting the reaction fluid to flow therethrough branches and then joins, is repeated a plurality of times.
   For example, there is provided a nucleic-acid amplifying apparatus comprising a flow passage, through which a reaction fluid containing a sample containing a nucleic acid and a reagent flows, a first branch portion, at which the reaction fluid branches, a plurality of first branch flow passages branching off the first branch portion, a first junction portion, at which the plurality of first branch flow passages join, a second branch portion, which is disposed downstream of the first junction portion, and at which the reaction fluid joined branches again, a plurality of second branch flow passages branching off the second branch portion, and a second junction portion, at which the plurality of second branch flow passages join, and wherein heating mechanisms having a plurality of set temperature zones are provided on the first branch flow passages and the second branch flow passages.
   In addition, the reagent is an amplification liquid containing enzyme, and there is provided a detection part that is communicated to the flow passage as joined and detects a nucleic acid.
   Thereby, in the case where a reaction fluid containing a nucleic acid of low concentration is supplied, dispersion in quantity of nucleic acid every lane of the branch flow passages leads to dispersion in quantity of amplification. However, by once joining flow passages together and again branching the flow passage for heating, dispersion every lane can be reduced and an increase in efficiency of amplification can result.
   Also, for example, the second branch flow passages are formed to be longer than the first branch flow passages. Thereby, even when a nucleic acid in the first branch flow passages involves dispersion, the nucleic acid is amplified to some degree, and the reaction liquid once joins and then branches, and is again adequately amplified in the second branch flow passages whereby dispersion can be effectively reduced and amplification can be adequately performed, thus enabling increasing the effect of amplification.
(3) Also, there is provided a chemical analysis apparatus comprising a flow passage, through which a reaction fluid containing a sample containing a nucleic acid and a reagent being mixed with the sample flows, a flow passage branch portion, at which the flow passage branches into a plurality of branch flow passages, a junction portion, at which the plurality of branch flow passages join, a joined flow passage, through which the reaction fluid as joined is conducted, and a detection part that detects the nucleic acid in the reaction fluid conducted to the joined flow passage, and wherein a heating mechanism having a plurality of set temperature zones is provided on the branch flow passages, and the heating mechanism is formed such that the branch flow passages repeatedly pass through the plurality of set temperature zones.
(4) There is provided a nucleic-acid amplifying method comprising a branch step of branching a reaction fluid containing a sample containing a nucleic acid and a reagent being mixed with the sample, a repeated heating and cooling step of repeatedly heating and cooling the branch reaction fluid parts between a plurality of set temperatures, and a junction step of joining the plurality of branch reaction fluid parts that have been repeatedly heated and cooled.

Alternatively, there is provided a nucleic-acid amplifying method comprising a first branch step of branching a reaction fluid containing a sample containing a nucleic acid and a reagent being mixed with the sample, a first repeated heating and cooling step of repeatedly heating and cooling the branch reaction fluid parts between a plurality of set temperatures, a first junction step of joining the plurality of branch reaction fluid parts that have been repeatedly heated and cooled, a second branch step of branching the joined reaction fluid again, a second repeated heating and cooling step of repeatedly heating and cooling reaction fluid parts that have branched in the second branch step, between a plurality of set temperatures, and a second junction step of joining a plurality of branch reaction fluid parts that have been repeatedly heated and cooled in the second repeated heating and cooling step.

Also, it is preferable that a detection mechanism be provided to examine how a nucleic acid is amplified when a reagent flows through the flow passages and temperatures of a plurality of temperature zones, through which the flow passages after detection pass, can be set.

Other objects, features and advantages of the invention will become apparent from the following description of the embodiments of the invention taken in conjunction with the accompanying drawings.

### Brief Description Of The Several Views Of The Drawing

Fig. 1 is a view showing an entire construction of a gene analysis apparatus according to an embodiment of the invention.
Fig. 2 is a view showing the outer appearance of a nucleic-acid amplifying chip according to an embodiment of the invention.
Fig. 3 is a view showing the construction of a flow passage part of the nucleic-acid amplifying chip according to the embodiment of the invention.
Fig. 4 is a view showing a construction of a temperature control part of the nucleic-acid amplifying chip according to the embodiment of the invention.
Fig. 5 is a view showing how the flow passage part and the temperature control part correspond to each other in the nucleic-acid amplifying chip according to the embodiment of the invention.
Fig. 6 is an enlarged view showing the flow passage part of the nucleic-acid amplifying chip according to the embodiment of the invention.
Fig. 7 is a cross sectional view showing a structure of the nucleic-acid amplifying chip according to the embodiment of the invention.
Fig. 8 is a view illustrating the procedure of operations in the embodiment of the invention.
Fig. 9 is a view showing a flowing state in the flow passage part of the nucleic-acid amplifying chip according to the embodiment of the invention.
Fig. 10 is a view showing a flowing state in the flow passage part of the nucleic-acid amplifying chip according to the embodiment of the invention.
Fig. 11 is a view showing a corresponding relationship between flow passages and the gene analysis apparatus according to the embodiment of the invention.
Fig. 12 is a view showing a flowing state in the flow passage part of the nucleic-acid amplifying chip according to the embodiment of the invention.
Fig. 13 is a view showing a flowing state in the flow passage part of the nucleic-acid amplifying chip according to the embodiment of the invention.
Fig. 14 is a view showing a flowing state in the flow passage part of the nucleic-acid amplifying chip according to the embodiment of the invention.
Fig. 15 is a view showing a flowing state in the flow passage part of the nucleic-acid amplifying chip according to the embodiment of the invention.
Fig. 16 is a view showing a flowing state in the flow passage part of the nucleic-acid amplifying chip according to the embodiment of the invention.
Fig. 17 is a view showing a flowing state in the flow passage part of the nucleic-acid amplifying chip according to the embodiment of the invention.
Fig. 18 is a view showing a corresponding relationship between a junction portion of the flow passage part and the temperature control part in the nucleic-acid amplifying chip according to the embodiment of the invention.
Fig. 19 is a view showing a corresponding relationship between the flow passage part and the temperature control part in the nucleic-acid amplifying chip according to the embodiment of the invention.
Fig. 20 is a view showing a flowing state in the flow passage part of the nucleic-acid amplifying chip according to the embodiment of the invention.
Fig. 21 is a view showing a corresponding relationship between the flow passage part and the temperature control part in the nucleic-acid amplifying chip according to the embodiment of the invention.
Fig. 22 is a view showing a flowing state in the flow passage part of the nucleic-acid amplifying chip according to the embodiment of the invention.
Fig. 23 is a view showing a flowing state in the flow passage part of the nucleic-acid amplifying chip according to the embodiment of the invention.
Fig. 24 is a view showing a construction of a flow passage part of a nucleic-acid amplifying chip according to a further embodiment of the invention.
Fig. 25 is a view showing a construction of a temperature control part of the nucleic-acid amplifying chip according to the further embodiment of the invention.
Fig. 26 is a view illustrating the procedure of operations in the further embodiment of the invention.
Fig. 27 is a view showing a corresponding relationship between flow passages and the gene analysis apparatus according to the further embodiment of the invention.
Fig. 28 is a view showing a corresponding relationship between the flow passage part and the temperature control part in the nucleic-acid amplifying chip according to the further embodiment of the invention.
Fig. 29 is a view showing a flowing state in the flow passage part of the nucleic-acid amplifying chip according to the further embodiment of the invention.

### Detailed Description Of The Invention

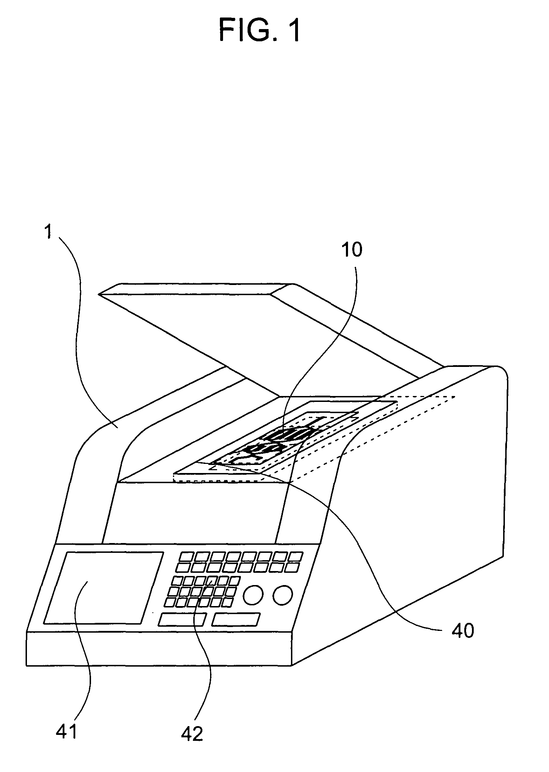

Embodiments of a gene analysis apparatus according to the invention will be described with reference to Figs. 1 to 29. In addition, the invention is not limited to a configuration disclosed in the specification of the present application but susceptible to modification on the basis of a known technology and a technology that will become a known technology in the future.

### (Embodiment 1)

An embodiment for amplification of a nucleic acid, for which an appropriate PCR cycle is unknown, will be described hereinafter.

Fig. 1 is a view showing an entire construction of a gene analysis apparatus 1. The gene analysis apparatus 1 comprises a mount base 40, on which a nucleic-acid amplifying chip 10 is set up, a monitor 41 that outputs work contents, a panel 42 for inputting of the work contents, and an optical equipment (not shown) for detection of an amplified nucleic acid. In accordance with the work contents input from the panel 42, the gene analysis apparatus 1 amplifies and detects gene via the nucleic-acid amplifying chip 10. A quantity and a kind of gene detected by the optical equipment are output to the monitor 41.

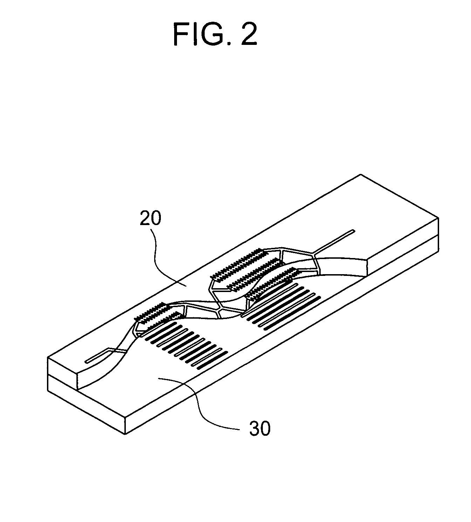

A construction of the nucleic-acid amplifying chip 10 will be described with reference to Figs. 2 to 7.

Fig. 2 is a view showing the outer appearance of the nucleic-acid amplifying chip 10. The nucleic-acid amplifying chip 10 is formed by joining a flow passage part 20 formed with grooves, through which a reagent to be used is allowed to flow, and a temperature control part 30 for controlling temperatures of flow passages in the flow passage part 20.

The flow passage part 20 comprises, on a surface side thereof in contact with the temperature control part 30, grooves that constitute a reagent injection flow passage portion 200, a first branch flow passage portion 203, a first amplification flow passage portion 204, a first flow passage junction portion 205, a second branch flow passage portion 206, a second amplification flow passage portion 207, a second flow passage junction portion 208, and a detection flow passage portion 209.

The temperature control part 30 comprises, on a surface side thereof in contact with the flow passage part 20, first thermal denaturation heaters 300 and first annealing heaters 301 that heat the first amplification flow passage portion 204 of the flow passage part 20, and second thermal denaturation heaters 302 and second annealing heaters 303 that heat the second amplification flow passage portion 207 of the flow passage part 20, and each of the heaters is provided with a temperature sensor (not shown). The heaters and the temperature sensors are connected via an electrode terminal 306 to the gene analysis apparatus 1 shown in Fig. 1, and temperatures of the heaters can be set freely via the panel 42 of the gene analysis apparatus 1. The temperature control part 30 is provided with through-holes that constitute a reaction liquid injection port 307, a cleaning liquid injection port 308, and a waste liquid port 309.

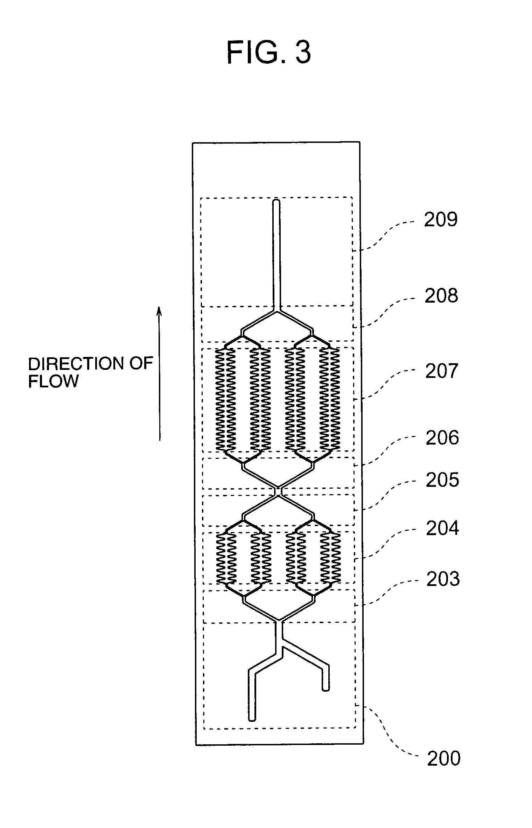

In this manner, the construction shown in Fig. 3 has a feature in constituting a nucleic-acid amplifying apparatus having a construction, in which a flow passage permitting a reagent for amplification of a target nucleic acid to pass through a plurality of temperature zones, branches. Concretely, the feature resides in comprising a flow passage, through which a reaction fluid containing a reagent containing a nucleic acid and a reagent to be mixed with the reagent flows, the first branch flow passage portion 203 being a flow passage branch portion, in which the flow passage branches into a plurality of branch flow passages, the first flow passage junction portion 205 being a junction portion, in which the plurality of branch flow passages join together, a joined flow passage, to which the reaction fluid as joined is conducted, and a heating mechanism provided in the branch flow passages to have a plurality of set temperature zones.

Thereby, temperature can be changed at high speed and the heat quantity as received can be increased by increasing the flow passage surface area, so that a nucleic acid can be amplified by effectively repeating temperature up and down.

The flow passage is featured by a construction, in which branching and joining are repeated several times.

In the case where a reaction fluid containing a nucleic acid of low concentration is supplied, the dispersion in the quantity of nucleic acid in every lane of the branch flow passages leads to a dispersion in the quantity of amplification from lane to lane. Simple amplification results in reduction in efficiency of amplification as a whole. Therefore, by once joining the flow passages together and again branching the flow passage into branch flow passages for amplification, the dispersion from lane to lane can be reduced, and an increase in the efficiency of the amplification can result.

The invention has a feature in that, for example, the second process of amplification is made longer than the first process of amplification.

In a concrete construction, the second branch flow passages are formed to be longer than the first branch flow passages. For example, the reaction liquid flowing through the first branch flow passages and the second branch flow passages is repeatedly maintained at the plurality of set temperatures by the heaters'that serve as a heating mechanism, and the number of times, at which the reaction liquid flowing through the second branch flow passages is subjected to temperature change, is made larger than the number of times, at which the reaction liquid flowing through the first branch flow passages is subjected to temperature change.

Thereby, even when there is involved dispersion in amplification in the first process of amplification, the reaction liquid is amplified to some degree to join together, and then branches to be adequately amplified again in the respective branch flow passages whereby dispersion can be further reduced and amplification can be adequately performed, thus enabling increasing the effect of amplification.

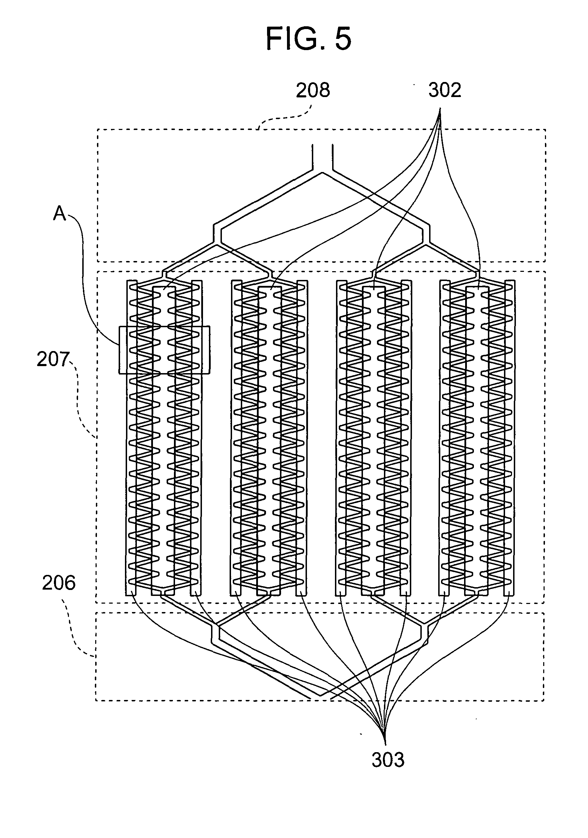

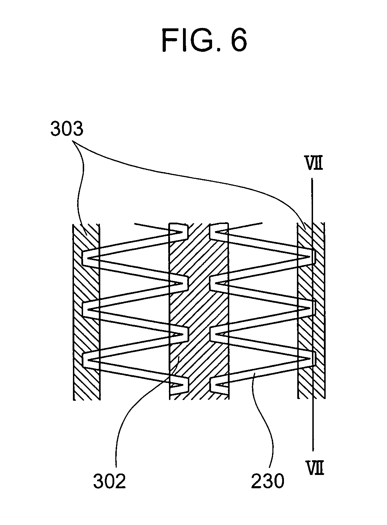

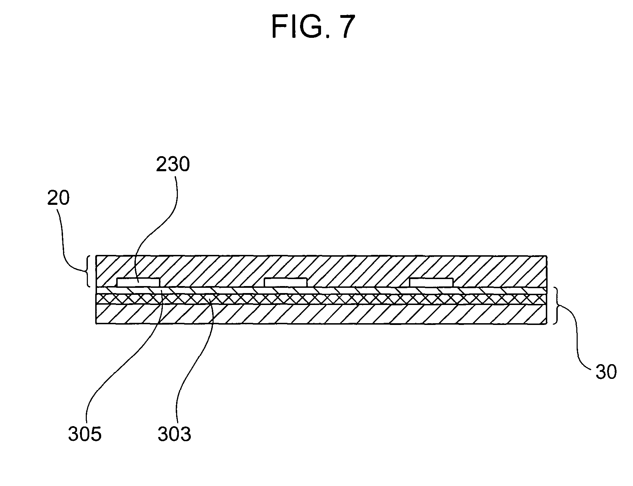

Fig. 5 is a view showing how the flow passage part 20 and the temperature control part 30 correspond to each other in the second branch flow passage portion 206, the second amplification flow passage portion 207, and the second flow passage junction portion 208 in the flow passage part 20. Flow passages that constitute the second amplification flow passage portion 207 alternately pass on the second thermal denaturation heaters 302 and the second annealing heaters 303 of the temperature control part 30. Likewise, flow passages that constitute the first amplification flow passage portion 204 alternately pass on the first thermal denaturation heaters 300 and the first annealing heaters 301. Fig. 6 is an enlarged view showing a region A in Fig. 5. Fig. 7 is a cross sectional view showing a structure of the nucleic-acid amplifying chip 10 taken along the line VII-VII in Fig. 6. A surface of the temperature control part 30 in contact with the flow passage part 20 is covered by an insulating film 305. The grooves on the flow passage part 20 and the surface of the temperature control part join each other to form the flow passages of the nucleic-acid amplifying chip 10.

In this manner, the heating mechanism has a feature in comprising the heaters 300 that constitute a first heating mechanism at a first temperature and the heaters 301 that constitute a second heating mechanism at a second temperature lower than the first temperature and in that the branch flow passages are formed so as to pass through regions heated by the first heating mechanism and the second heating mechanism. And, the branch flow passages are arranged so as to repeat several times, passage through the regions heated by the second heating mechanism after passing through the regions heated by the first heating mechanism.

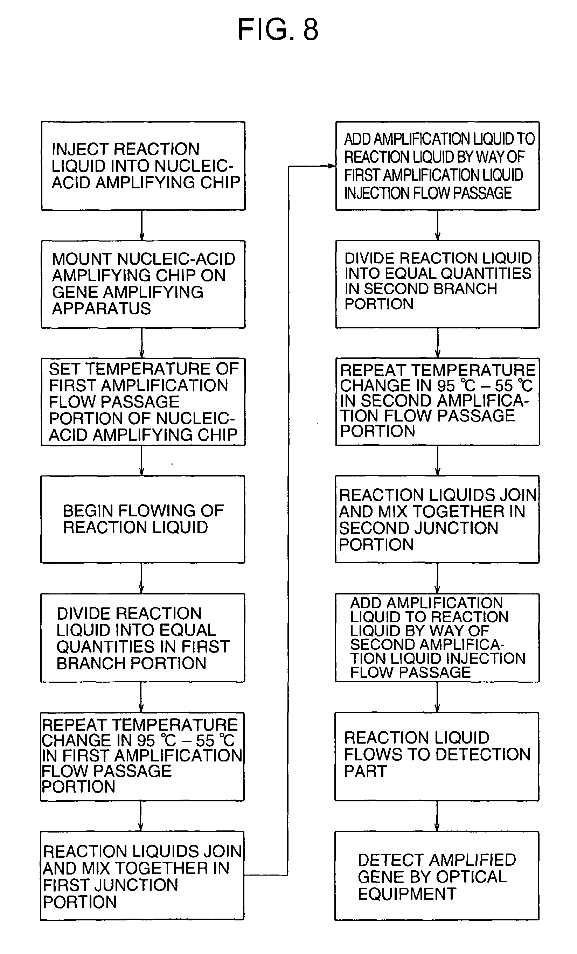

Figs. 8 to 23 show an embodiment, in which a reagent flows through the flow passages in the nucleic-acid amplifying chip 10 to amplify and detect a target gene. Fig. 8 shows flow of operations of amplification and detection.

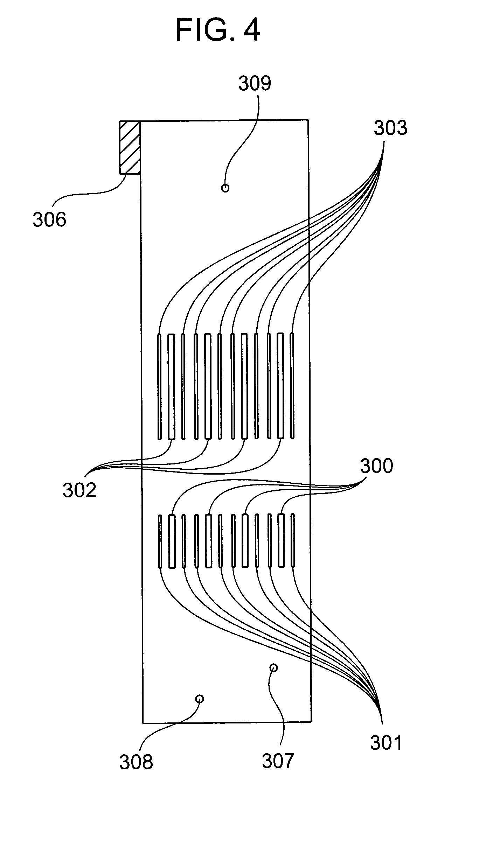

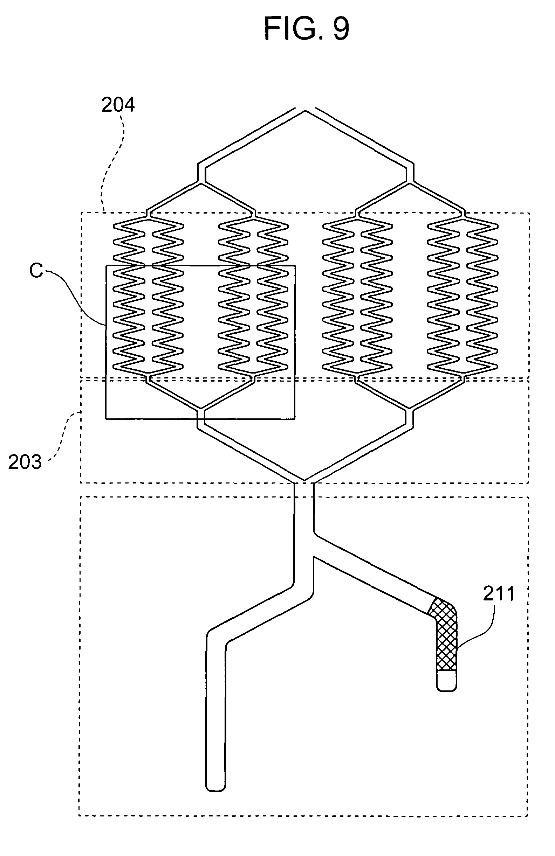

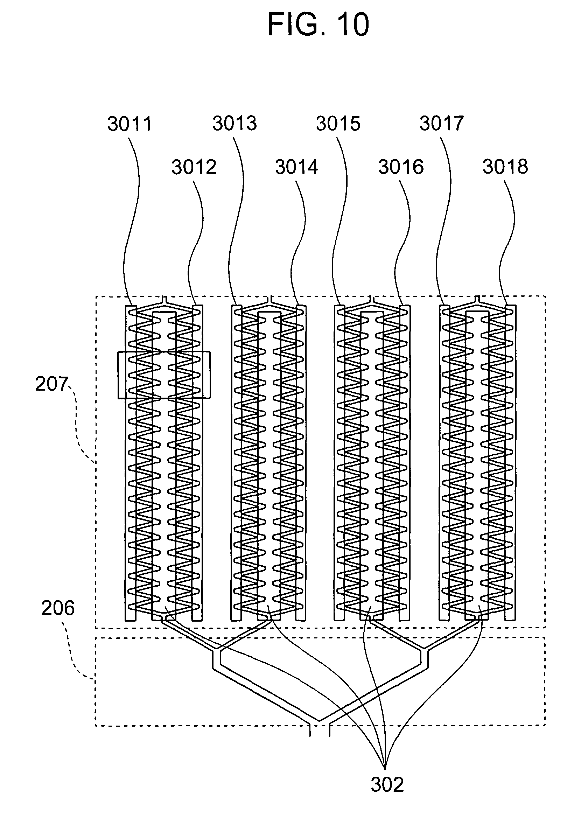

First, a reaction liquid 211 containing Template DNA is injected from the reaction liquid injection port 307 (Fig. 4) of the temperature control part 30 on the nucleic-acid amplifying chip 10 (Fig. 9). The reaction liquid contains DNA Polymerase, two kinds of primers, dNTP, metal ions, a buffer solution, and fluorochrome for detection of amplified DNA. For example, Cyber Green (manufactured by Molecular Probe Ltd.) is used as the fluorochrome. The nucleic-acid amplifying chip 10, into which the reaction liquid is injected, is mounted on the mount base 40 of the gene analysis apparatus 1. After being mounted, temperatures of the heaters of the temperature control part 30 on the nucleic-acid amplifying chip 10 are set. For example, the first thermal denaturation heaters 300 are set to 95°C for thermal denaturation and the first annealing heaters 301, respectively, are set to different temperatures. For example, as shown in Fig. 10, the first annealing heaters 301 corresponding to the micro flow passages that constitute the first amplification flow passage portion 204 comprise first small annealing heaters 3011, 3012, 3013, 3014, 3015, 3016, 3017, 3018 that are set to from 55°C to 62°C at intervals of 1°C.

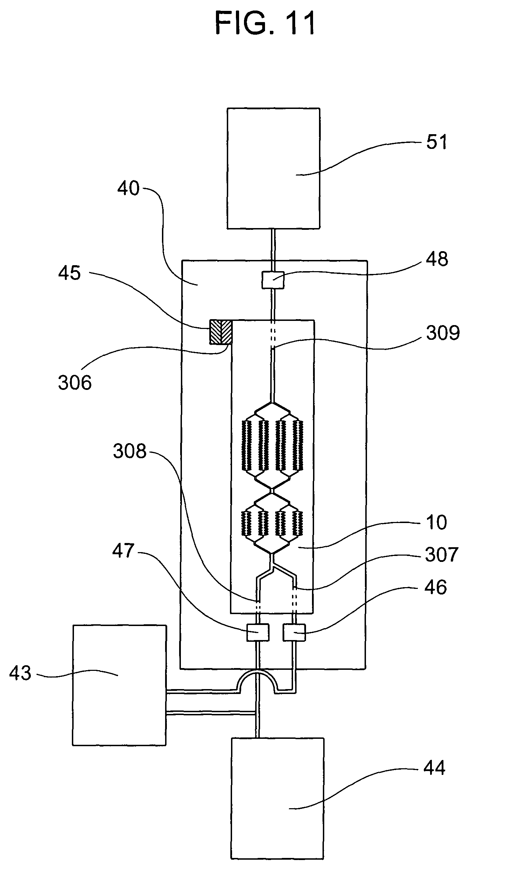

Fig. 11 shows the relationship between the nucleic-acid amplifying chip 10 after mounted and the mount base 40. The electrode terminal 306 of the nucleic-acid amplifying chip 10 is mounted to a mount base electrode terminal 45 of the mount base 40, a reaction liquid injection port valve 46 is mounted to the reaction liquid injection port 307, a cleaning liquid injection valve 47 is mounted to the cleaning liquid injection port 308, and a waste liquid port valve 48 is mounted to the waste liquid port 309. A cleaning liquid 49 is put into a tank 44. Pressure produced by a pump 43 and opening and closing actions of the respective valves 46, 47, 48 control flows of the reaction liquid and the cleaning liquid, which pass through the flow passages in the nucleic-acid amplifying chip 10, pass through the waste liquid port 309 after amplification and detection of a target gene, and are discarded into a waste liquid container 51. TE buffer, etc. are used as the cleaning liquid.

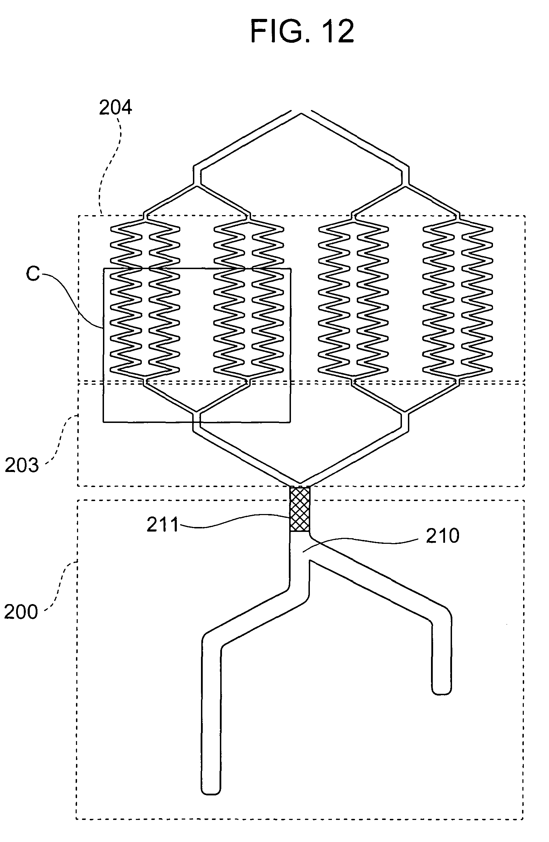

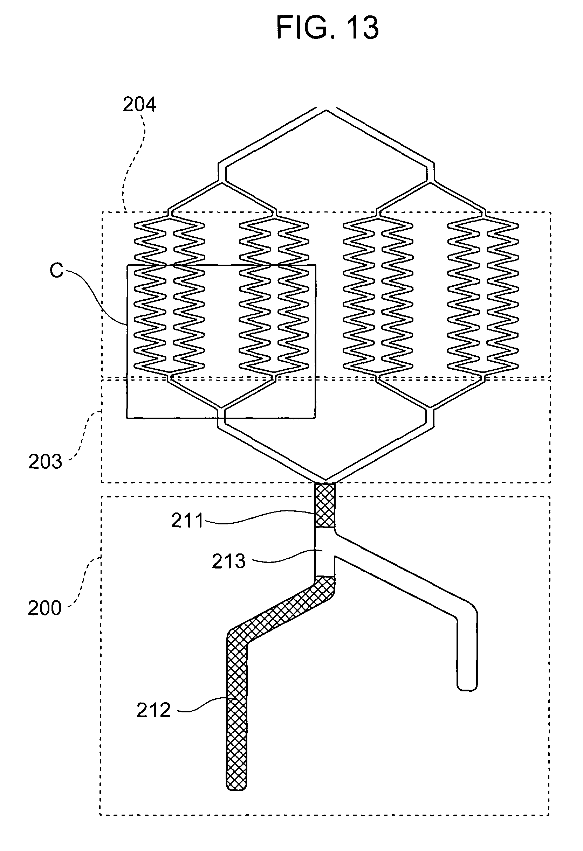

Figs. 12 and 13 show how the reaction liquid 211 flows until it flows to the first branch flow passage portion 203 after the reaction liquid is injected into the nucleic-acid amplifying chip 10 and the nucleic-acid amplifying chip is mounted on the mount base 40. In a state, in which the waste liquid port valve 48 is opened and the cleaning liquid injection valve 47 is closed, the pump 43 is used to push out the reaction liquid 211 to a reaction liquid junction portion 210 (Fig. 12). Subsequently, the waste liquid port valve 48 is closed and the cleaning liquid injection valve 47 is opened, and the pump 43 is used to push out the cleaning liquid 212 before the reaction liquid junction portion 210. Subsequently, the waste liquid port valve 48 is opened and the reaction liquid injection port valve 46 is closed, and the pump 43 is used to push out the cleaning liquid 212. At this time, since an air layer 213 is produced between the reaction liquid 211 and the cleaning liquid 212 (Fig. 13), the reaction liquid 211 and the cleaning liquid 212 will not mix with each other. The pump 43 continuously causes the reaction liquid 211 to flow downstream in the flow passages. Since the branch flow passages have the same cross sectional area, the reaction liquid 211 passes through the first branch flow passage portion 203 to be divided into equal quantities in the first amplification flow passage portion 204.

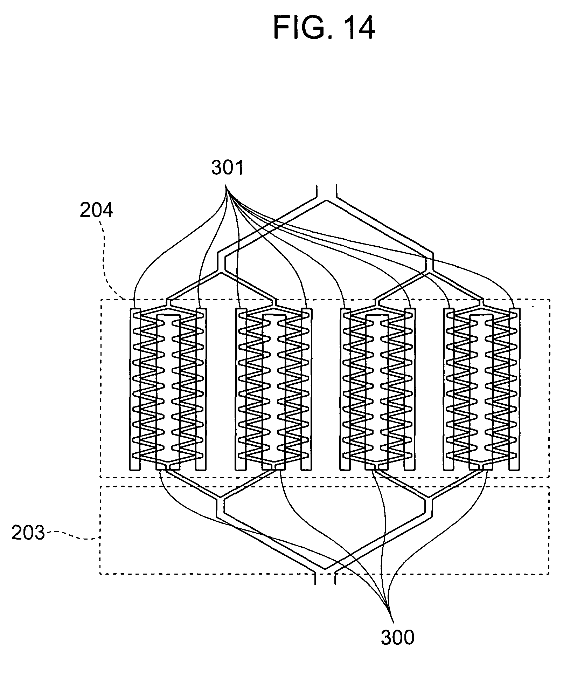

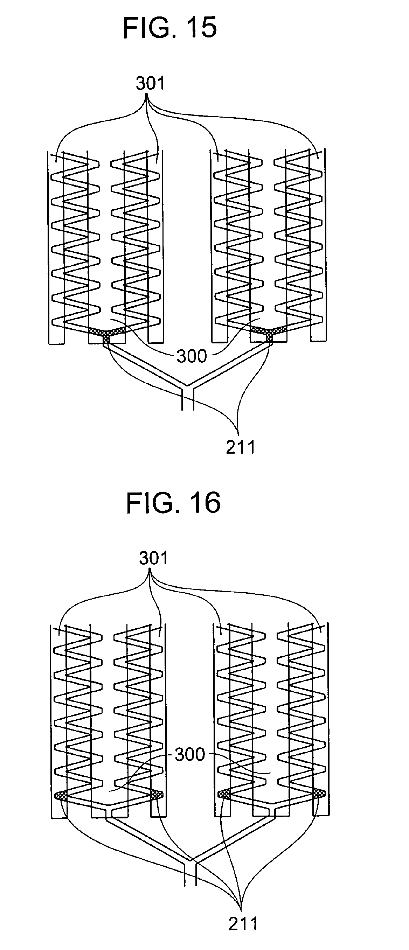

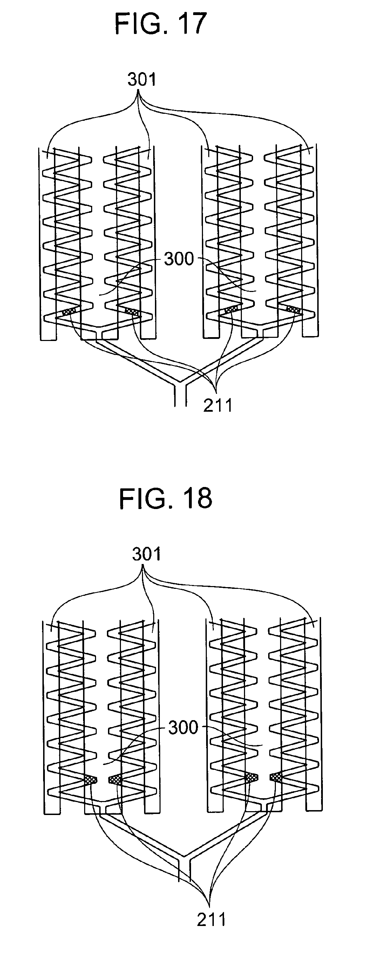

Fig. 14 shows a corresponding relationship between the first amplification flow passage portion 204 and the temperature control part 30. The flow passages of the first amplification flow passage portion 204 pass alternately the first thermal denaturation heaters 300 set to 95°C and the first annealing heaters 301 set to 55°C. The reaction liquid 211 having been divided into equal quantities passes through the first branch flow passage portion 203 to be separated in the first amplification flow passage portion 204, and then flows through the first amplification flow passage portion 204 to pass alternately through a temperature zone of 95°C and a temperature zone of 55°C. Figs. 15 to 18 show those processes, in which the reaction liquid 211 passes through the first amplification flow passage portion 204 and the amplifying reaction of DNA occurs. When the reaction liquid 211 passes the first thermal denaturation heaters 300 set to 95°C (Fig. 15), a dissociation reaction from double-strands DNA to single-strand DNA occurs due to thermal denaturation, and when the reaction liquid then passes the first annealing heaters 301 set to 55°C (Fig. 16), the single-strand DNA makes an annealing reaction with the primer in the reaction liquid 211. Further, in that process, in which the reaction liquid 211 flows to the first thermal denaturation heaters 300 from the first annealing heaters 301 (Fig. 17), the amplifying reaction of DNA occurs and DNA amplifies. The reaction liquid 211 passes again the first thermal denaturation heaters 301 (Fig. 18) and double-strands DNA is separated into single-strand DNA. In the process of passing through the first amplification flow passage portion 204, the reaction liquid 211 is subjected to PCR reaction due to repeated temperature changes in 95°C - 55°C and DNA amplifies.

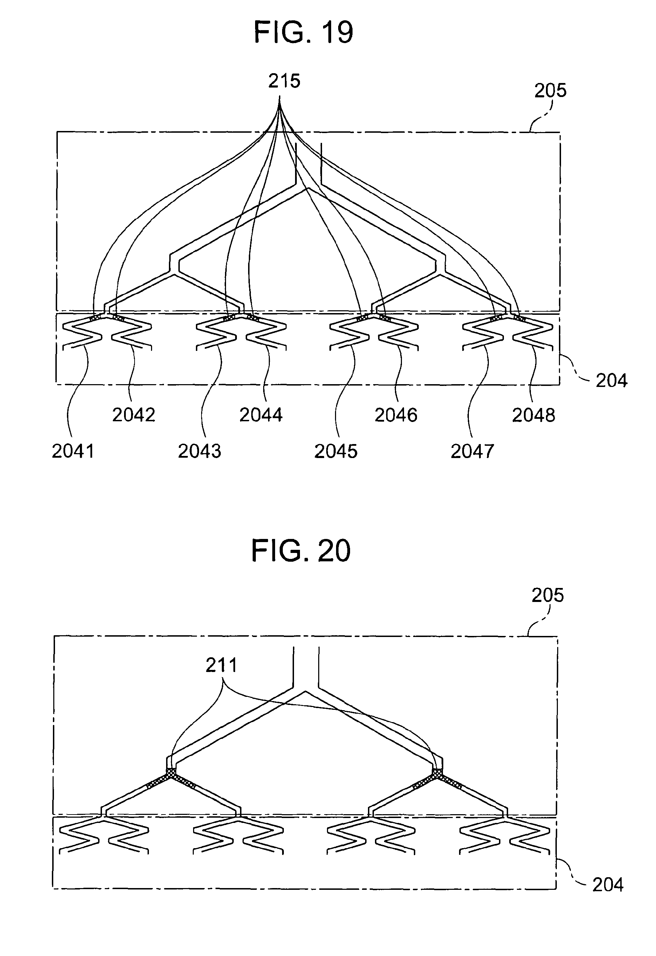

Since the first annealing heaters 301 are different from each other in set temperature, the reaction liquids as divided are different in amplification efficiency according to differences in set temperature. When the respective reaction liquids flow to last flow passages 215 in the first amplification flow passage portion 204 (Fig. 19), the optical equipment (not shown) detects quantities of amplification of the nucleic acid for the micro flow passages 2041, 2042, 2043, 2044, 2045, 2046, 2047, 2048. An annealing temperature used for a flow passage that is maximum in quantity of amplification is selected on the basis of results of detection and temperature of the second annealing heaters 303 for heating of the second amplification flow passage portion 207 is decided. For example, when the annealing temperature of 56°C is appropriate, the second annealing heaters 303 are set to 56°C. The second thermal denaturation heaters 302 are set to 95°C for thermal denaturation of the nucleic acid.

As shown in Fig. 20, the reaction liquids 211 having passed through the first amplification flow passage portion 204 join together in the first flow passage junction portion 205, in which the reaction liquids 211 as divided are mixed together. Such mixing dissolves that difference in quantity of amplification, which is caused by a difference in set temperature in the first amplification flow passage portion 204. In order to prevent a difference every flow passage from becoming excessive in the amplifying reaction in the first amplification flow passage portion 204, the flow passages are designed so that temperature changes ten times in 95°C - 55°C in the first amplification flow passage portion 204.

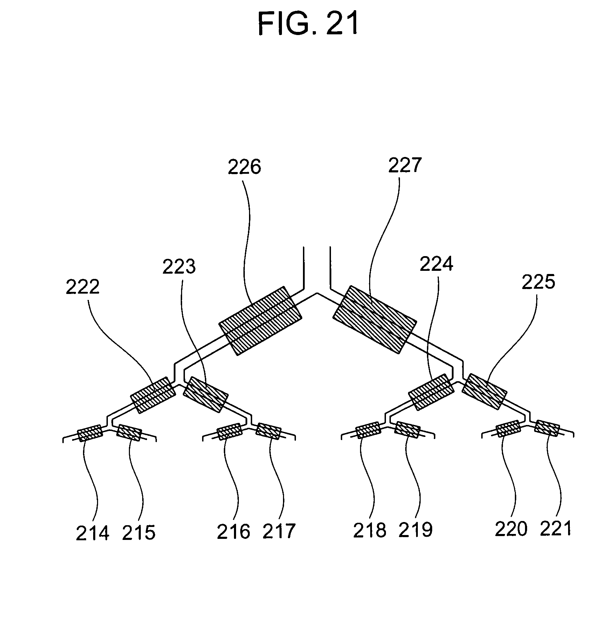

As shown in Fig. 21, mixing heaters 214, 215, 216, 217, 218, 219, 220, 221, 222, 223, 224, 225, 226, 227 are provided in locations in the temperature control part 30 corresponding to the first flow passage junction portion 205, and by setting the heaters 214, 215, the heaters 216, 217, the heaters 218, 219, the heaters 220, 221, the heaters 222, 223, the heaters 224, 225, and the heaters 226, 227, respectively, to different temperatures, junctions of the flow passages of the first flow passage junction portion 205 may be made different in temperature and differences in thermal diffusion may be made use of to further enhance the effect of mixing. The reaction liquid 211 having passed through the first flow passage junction portion 205 is made uniform in constituent composition by mixing.

In this manner, the invention has a feature in the provision of heating mechanisms of different set temperatures on the branch flow passages on a downstream side of the heating mechanism and on an upstream side of the flow passage junction portion. Also, the invention has a feature in that the junction portion has the function of temperature control such that parts of a reagent flowing in the flow passages structured to branch, extend through a plurality of temperature zones, and join together are different in temperature when the parts of the reagent join together.

Concretely, the invention has a feature in, for example, the provision of first and second branch flow passages communicated to the flow passage junction portion 205, a first heater as a first heating mechanism to put the first branch flow passage at a first heating temperature, and a second heater as a second heating mechanism to put the second branch flow passage at a second heating temperature.

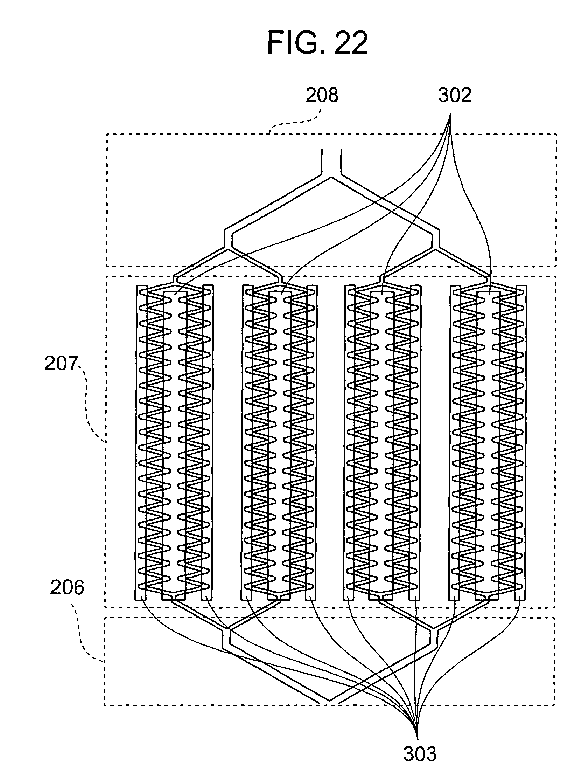

Subsequently, the reaction liquid 211 passes through the second branch flow passage portion 206 of the flow passage part 20 shown in Fig. 22 to be divided into equal quantities in the second amplification flow passage portion 207.

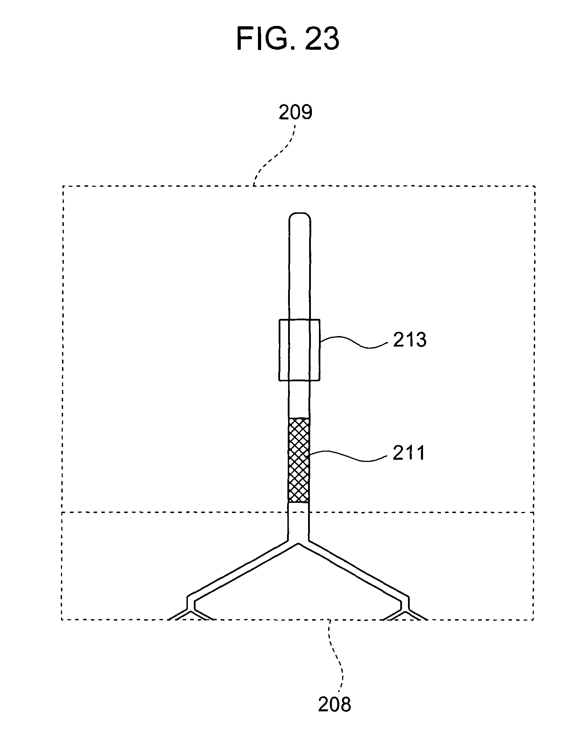

Fig. 22 shows a corresponding relationship between the second branch flow passage portion 206, the second amplification flow passage portion 207, and the second flow passage junction portion 208 in the flow passage part 20 and the second thermal denaturation heaters 302 and the second annealing heaters 303 in the temperature control part 30. The flow passages in the second amplification flow passage portion 207 extend alternately on the second thermal denaturation heaters 302 set to 95°C and the second annealing heaters 303 set to 55°C. In the same manner as at the time of passing through the first amplification flow passage portion 204, the nucleic acid in the reaction liquid flows through the second amplification flow passage portion 207 to be thereby subjected to repeated temperature changes in 95°C - 55°C, so that the nucleic acid amplifies again due to the PCR reaction. The reaction liquid having passed through the second amplification flow passage portion 207 is again mixed when passing through the second flow passage junction portion 208, and flows to the detection part 209 shown in Fig. 3 (Fig. 23). The optical equipment (not shown) detects, through a detection window 213, the amplified nucleic acid in the reaction liquid. A chemical analysis apparatus provided with the detection part 209 can also analyze the amplified nucleic acid and perform a highly accurate analysis.

According to the embodiment, the nucleic-acid amplification flow passage, of which temperature can be set, is branched into a plurality of flow passages and therefore, it is possible to prevent the reaction liquid from spreading in a flow direction and flowing across a plurality of temperature zones. Therefore, time, during which the reaction liquid is present in the plurality of temperature zones, can be shortened and non-uniformity of the reaction liquid generated in temperature is reduced. Further, since the reaction liquid is increased in contact area, the reaction liquid is enhanced in heat transfer coefficient to enable shortening time required for heating and cooling of the reaction liquid, which leads to shortening of reaction time. Also, since the branch flow passages again join together to mix the reaction liquids, non-uniformity of components generated in the reaction liquids every amplification flow passage in the process of amplification is dissolved, so that there is produced an effect for an increase in quantity of amplification.

Also, since it is possible to consistently perform a first-stage PCR reaction, in which a plurality of PCR cycles having different temperature changes are performed and an appropriate PCR cycle is examined, and a second-stage PCR reaction, in which the reaction liquid is again mixed and uniformed and a PCR reaction is performed in the examined appropriate PCR cycle, amplification is enabled even in a template nucleic acid, for which an appropriate PCR cycle is unknown.

In this manner, according to the embodiment of the invention, it is possible to prevent the reaction liquid from excessively spreading in a flow direction by branching a micro flow passage, of which temperature can be set, into a plurality of flow passages. Therefore, the reaction liquid is prevented from flowing across a plurality of temperature zones, and non-uniformity of temperature generated in the reaction liquid is reduced. Further, since the reaction liquid is increased in contact area, the reaction liquid is enhanced in heat transfer coefficient to enable shortening time required for heating and cooling of the reaction liquid, which leads to shortening of reaction time. Also, since the branch flow passages again join together to mix the reaction liquid, non-uniformity of components generated in reaction liquids every amplification flow passage in the process of amplification is dissolved, so that there is produced an effect for an increase in quantity of amplification.

Also, since a process to find an appropriate PCR cycle and a process, in which a PCR reaction is performed in the found appropriate PCR cycle, can be consistently performed, amplification is enabled even in a template nucleic acid, for which an appropriate PCR cycle is unknown.

### (Embodiment 2)

Subsequently, there is illustrated an embodiment, in which a PCR amplification liquid containing no template nucleic acid is added to a PCR reaction liquid in the process of PCR amplification reaction.

The gene analysis apparatus 1 (Fig. 1) used in the Embodiment 1 is used also in the present embodiment.

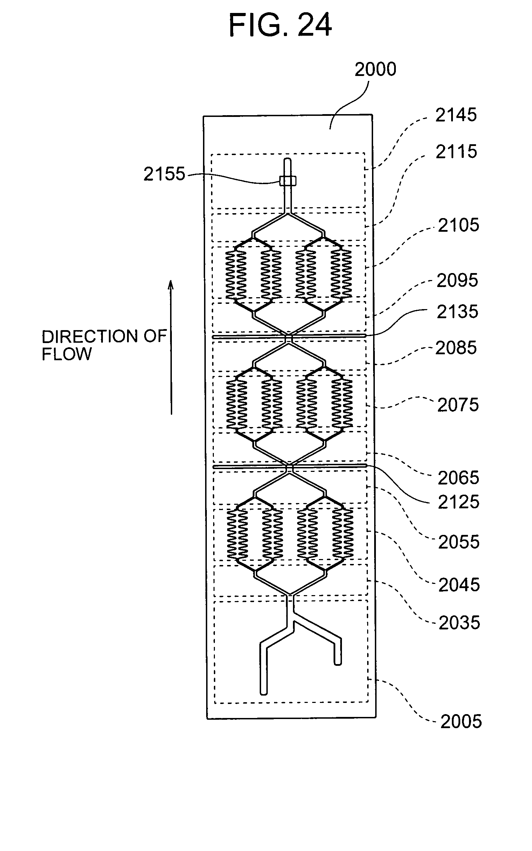

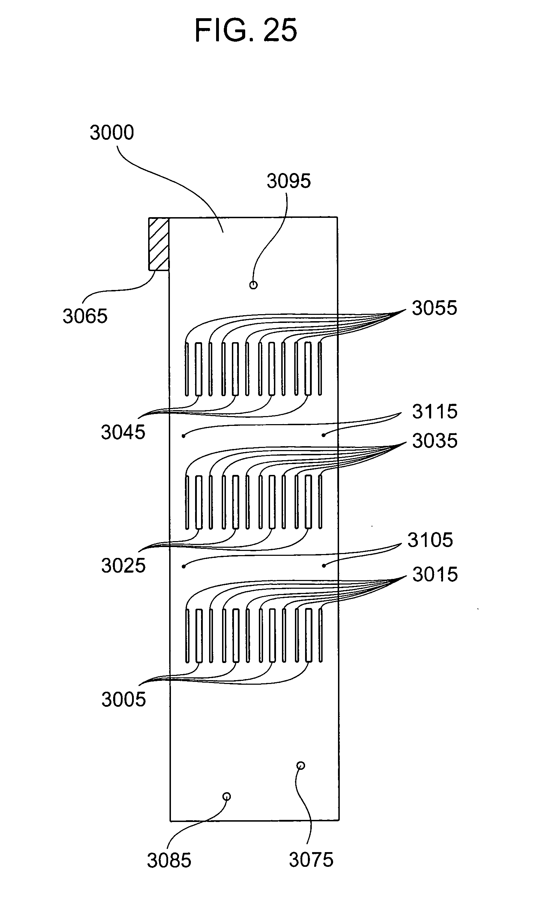

A construction of a nucleic-acid amplifying chip 105 will be described with reference to Figs. 24 and 25. In the same manner as in the Embodiment 1, the nucleic-acid amplifying chip is composed by joining a flow passage part 2000 (Fig. 24) formed with grooves, in which a reagent being used is allowed to flow, and a temperature control part 3000 (Fig. 25) for controlling temperatures of flow passages in the flow passage part 2000.

The flow passage part 2000 comprises, on a surface side thereof in contact with the temperature control part 3000, grooves that constitute a reagent injection portion 2005, a first branch flow passage portion 2035, a first amplification flow passage portion 2045, a first junction portion 2055, a second branch portion 2065, a second amplification flow passage portion 2075, a second junction portion 2085, a third branch portion 2095, a third amplification flow passage portion 2105, a third junction portion 2115, a first amplification injection flow passage portion 2125, a second amplification injection flow passage portion 2135, and a detection part 2145. An optical window 2155 for detection is provided on a side of the flow passage part opposite to the surface in contact with the temperature control part 3000.

The temperature control part 300 comprises, on a surface side thereof in contact with the flow passage part 2000, first thermal denaturation heaters 3005 and first annealing heaters 3015 that heat the first amplification flow passage portion 2045, second thermal denaturation heaters 3025 and second annealing heaters 3035 that heat the second amplification flow passage portion 2075, and third thermal denaturation heaters 3045 and third annealing heaters 3055 that heat the third amplification flow passage portion 2105, the respective heaters being provided with a temperature sensor (not shown). The respective heaters and the respective temperature sensors are connected via an electrode terminal 3065 to the gene analysis apparatus 1 shown in Fig. 1, so that temperatures of the heaters can be set freely via the panel 42 of the gene analysis apparatus 1. The temperature control part 3000 is also provided with through-holes that constitute a reaction liquid injection port 3075, a cleaning liquid injection port 3085, a waste liquid port 3095, first amplification liquid injection ports 3105, and second amplification liquid injection ports 3115.

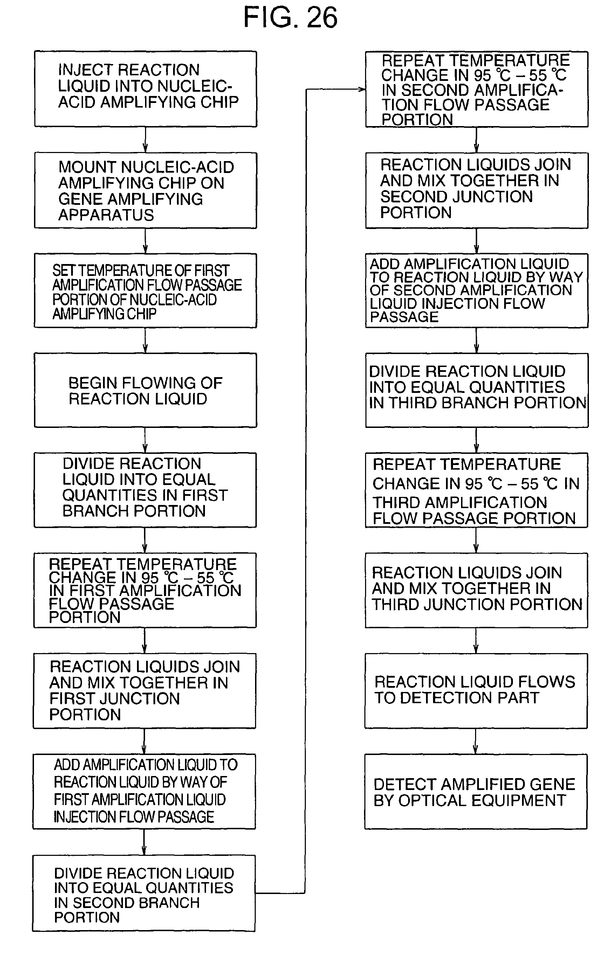

Figs. 26 to 29 show an example, in which a reagent flows through the flow passages in the nucleic-acid amplifying chip 105 to amplify and detect a target gene. Fig. 26 shows flow of operations of amplification and detection.

First, a reaction liquid containing Template DNA is injected from the reaction liquid injection port 3075 of the temperature control part 3000 on the nucleic-acid amplifying chip 105. Further, a reaction liquid containing no Template DNA is injected from the first amplification liquid injection ports 3105 and the second amplification liquid injection ports 3115. The reaction liquid contains DNA Polymerase, two kinds of primers, dNTP, metal ions, a buffer solution, and fluorochrome for detection of amplified DNA. For example, Cyber Green (manufactured by Molecular Probe Ltd.) is used as the fluorochrome. The nucleic-acid amplifying chip 105, into which the reaction liquids are injected, is mounted on the mount base 405 of the gene analysis apparatus 1. After mounted, temperatures of the heaters of the temperature control part 3000 on the nucleic-acid amplifying chip 105 are set. For example, the first thermal denaturation heaters 3005, the second thermal denaturation heaters 3025, and the third thermal denaturation heaters 3045 are set to 95°C for thermal denaturation and the first annealing heaters 3015, the second annealing heaters 3035, and the third annealing heaters 3055 are set to 55°C for annealing.

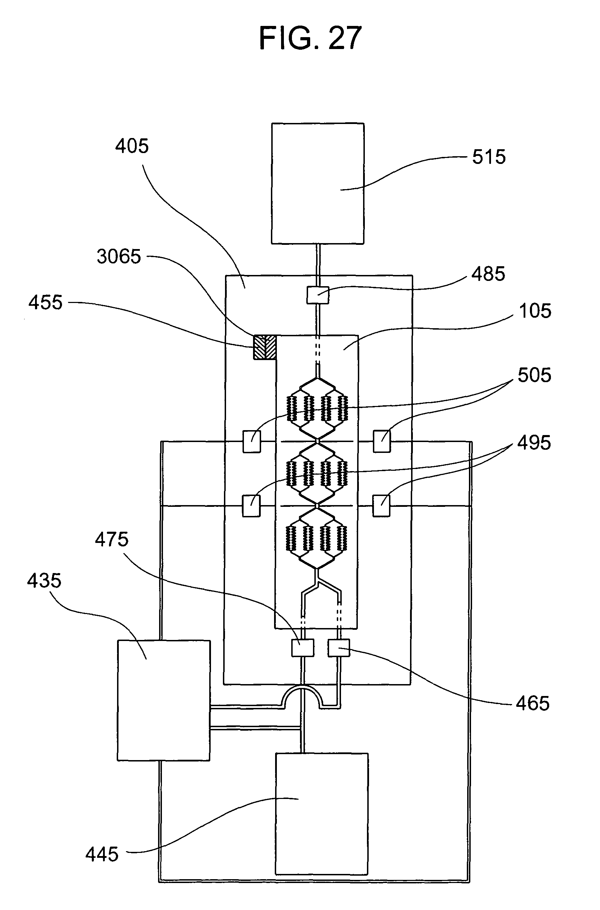

Fig. 27 shows the relationship between the nucleic-acid amplifying chip 105 after mounted and a mount base 405. The electrode terminal 3065 of the nucleic-acid amplifying chip is mounted to a mount base electrode terminal 455 of the mount base 405, a reaction liquid injection port valve 465 is mounted to the reaction liquid injection port 3075, a cleaning liquid injection valve 475 is mounted to the cleaning liquid injection port 3085, a waste liquid port valve 485 is mounted to the waste liquid port 3095, first amplification liquid injection valves 495 are mounted to the first amplification liquid injection ports 3105, and second amplification liquid injection valves 505 are mounted to the second amplification liquid injection ports 3115. A cleaning liquid is put into a tank 445. Pressure produced by a pump 435 and opening and closing actions of the respective valves 465, 475, 485, 495, 505 control flows of the reaction liquid and the cleaning liquid, which pass through the flow passages in the nucleic-acid amplifying chip 105, pass through the waste liquid port 3095 after amplification and detection of a target gene, and are discarded into a waste liquid container 515. TE buffer, etc. are used as the cleaning liquid.

That process, in which DNA is amplified in the PCR reaction by causing a reaction liquid containing a template nucleic acid to flow in the flow passages in the nucleic-acid amplifying chip 105, will be described hereinafter.

In the same manner as in the Embodiment 1, the pump 435 and opening and closing actions of the reaction liquid injection port valve 465, the cleaning liquid injection valve 475, and the waste liquid port valve 485 cause the reaction liquid injected into the nucleic-acid amplifying chip 105 to flow through the reagent injection portion 2005, the first branch portion 2035, the first amplification flow passage portion 2045, and the first junction portion 2055 in the flow passage part 2000 shown in Fig. 24. At this time, the first amplification liquid injection valves 495 and the second amplification liquid injection valves 505 are closed.

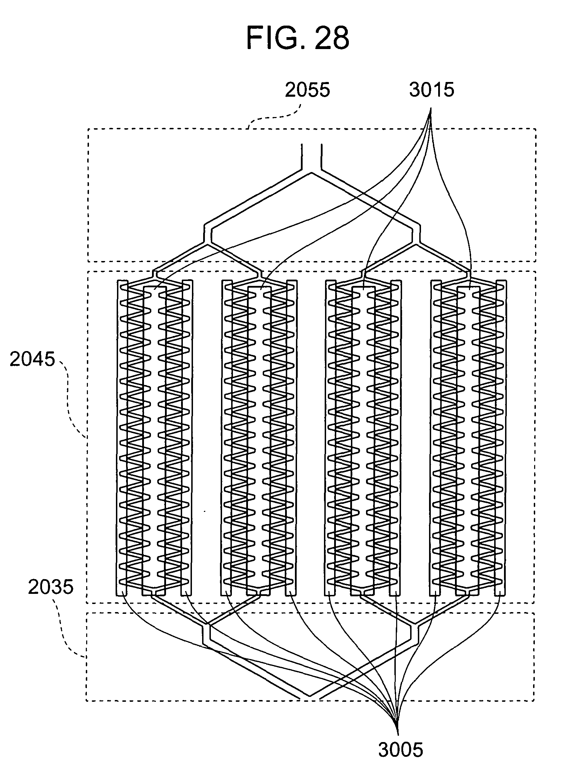

Fig. 28 shows a corresponding relationship between the first amplification flow passage portion 2045 and the first thermal denaturation heaters 3005 and the first annealing heaters 3015 in the temperature control part 3000. Like the nucleic-acid amplifying chip 10 used in the Embodiment 1, respective flow passages of the first amplification flow passage portion 2045 pass alternately the first thermal denaturation heaters 3005 set to 95°C and the first annealing heaters 3015 set to 55°C. The reaction liquid having been divided into equal quantities by passing through the first branch portion 2035 flows through the first amplification flow passage portion 2045 to pass alternately through temperature zones of 95°C and temperature zones of 55°C. Consequently, the reaction liquid is subjected to temperature changes required for the PCR reaction to be amplified. The positional relationship between the second amplification flow passage portion 2075 and the second thermal denaturation heaters 3025 and the second annealing heaters 3035, and the positional relationship between the third amplification flow passage portion 2105 and the third thermal denaturation heaters 3045 and the third annealing heaters 3055 in Fig. 24 are also the same as the positional relationship between the first amplification flow passage portion 2045 and the first thermal denaturation heaters 3005 and the first annealing heaters 3015, so that when the reaction liquid pass through the second amplification flow passage portion and the third amplification flow passage portion, the reaction liquid is subjected to similar temperature changes to those in the first amplification flow passage portion, whereby the nucleic acid in the reaction liquid amplifies.

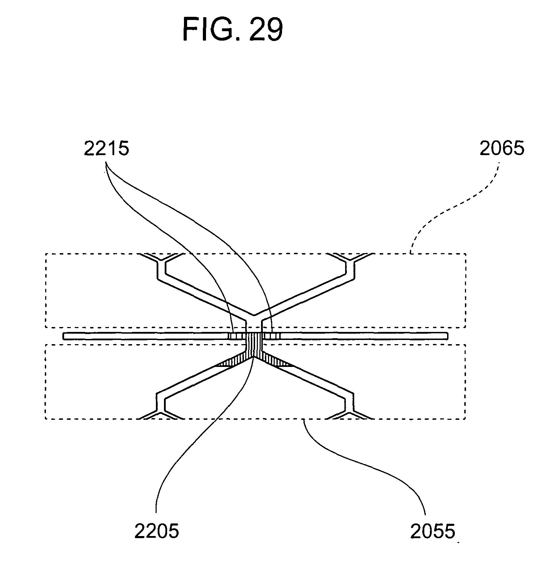

When the reaction liquid having passed through the first junction portion 2055 flows into the second branch portion 2065, an amplification liquid 2215 is added to and mixed with the reaction liquid 2205 as shown in Fig. 29. Such operation of addition is performed by pressure from the pump 435 in a state, in which the first amplification liquid injection valves 495 shown in Fig. 27 are opened.

The reaction liquid, to which the amplification liquid has been added, passes through the second branch portion 2065, the second amplification flow passage portion 2075, and the second junction portion 2085 shown in Fig. 24. When passing through the second amplification flow passage portion 2075, the reaction liquid is subjected to temperature changes in 95°C - 55°C in the same manner as that when it passes through the first amplification flow passage portion 2045, so that a template nucleic acid amplifies due to the PCR reaction. Further, when the reaction liquid flows to reach the third branch portion 2095, a further amplification liquid is added thereto by opening the second amplification liquid injection valves 505 shown in Fig. 27. The reaction liquid, to which the further amplification liquid has been added, passes through the third branch portion 2095, the third amplification flow passage portion 2105, and the third junction portion 2115. When passing through the third amplification flow passage portion 2105, the reaction liquid is subjected to temperature changes in 95°C - 55°C in the same manner as that when it passes through the first amplification flow passage portion 2045, so that a template nucleic acid amplifies due to the PCR reaction.

The reaction liquid flows into the detection part 2145, and the optical equipment is used to detect, through the detection window 2155, the amplified nucleic acid.

In this manner, the invention has a feature in the provision of the flow passages, through which reagents such as amplification liquids, etc. are added in the process of amplification.

Also, there is provided a construction, in which a flowing reagent or reagents can be newly added when a reagent flows in flow passages that pass through a plurality of temperature zones. Also, the problems in the conventional art can be solved by providing a nucleic acid amplifying method having a feature in mixing of the reagent or reagents in the process, in which a reagent for amplification of a target nucleic acid flows in the flow passages that pass through a plurality of temperature zones.

According to the present embodiment, a reagent or reagents are newly added in order to make up for a substrate that becomes insufficient and DNA polymerase that has been deactivated, in the process of the PCR reaction, so that it is possible to restrict reduction of a template nucleic acid in quantity of amplification due to insufficiency of a substrate and deactivation of DNA polymerase.

It is possible according to the invention to provide a nucleic-acid amplifying apparatus that is high in efficiency of amplification.

It should be further understood by those skilled in the art that although the foregoing description has been made on embodiments of the invention, the invention is not limited thereto and various changes and modifications may be made without departing from the spirit of the invention and the scope of the appended claims.

## Claims

1. Nucleic-acid amplifying apparatus (1, 10), comprising:
a flow passage (20), through which a reaction fluid containing a sample containing a nucleic acid and a reagent flows, the flow passage including
a flow passage branch portion (203; 206), at which the flow passage branches into a plurality of branch flow passages (204; 207),
a junction portion (205; 208), at which the plurality of branch flow passages (204; 207) join, and
a joined flow passage, through which the reaction fluid as joined is conducted, and
a heating mechanism (30) having a plurality of set temperature zones (300, 301; 302, 303) provided on the branch flow passages (204; 207).

2. Nucleic-acid amplifying apparatus according to claim 1, wherein the heating mechanism (30) comprises a first heating mechanism (300; 302) at a first temperature and a second heating mechanism (301; 303) at a second temperature lower than the first temperature, and the branch flow passages (204; 207) are arranged so as to repeatedly pass through a zone heated by the second heating mechanism (301; 303) and another zone heated by the first heating mechanism (300; 302).

3. Nucleic-acid amplifying apparatus, preferably according to claim 1 or 2, comprising:
a flow passage (20), through which a reaction fluid containing a sample containing a nucleic acid and a reagent flows, the flow passage including
a first branch portion (203), at which the flow passage branches,
first branch flow passages (204) branching off the first branch portion (203),
a first junction portion (205), at which the first branch flow passages (204) join together,
a second branch portion (206), at which the flow passage joined at the first junction portion (205) branches again,
second branch flow passages (207) branching off the second branch portion (206), and
a second junction portion (208), at which the second branch flow passages (207) join together, and
a heating mechanism (30) having a plurality of set temperature zones (300, 301; 302, 303) provided on the first branch flow passages (204) and the second branch flow passages (207).

4. Nucleic-acid amplifying apparatus according to claim 3, wherein the second branch flow passages (207) are formed to be longer than the first branch flow passages (204).

5. Nucleic-acid amplifying apparatus according to claim 3 or 4, wherein the reaction fluid flowing through the first branch flow passages (204) and the second branch flow passages (207) is repeatedly maintained at the plurality of set temperatures by the heating mechanisms (300, 301; 302, 303), and the number of times, at which the reaction fluid flowing through the second branch flow passages (207) is subjected to temperature change by the heating mechanism (302, 303), is made larger than the number of times, at which the reaction fluid flowing through the first branch flow passages (204) is subjected to temperature change by the heating mechanism (300, 301).

6. Nucleic-acid amplifying apparatus according to any of claims 3 to 5, further comprising a flow passage or passages provided between the first branch flow passages and the second branch flow passages to allow a reagent to be supplied.

7. Nucleic-acid amplifying apparatus according to any of claims 1 to 6, further comprising a first branch flow passage and a second branch flow passage that are communicated to the junction portion, a first heating mechanism that puts the first branch flow passage at a first heating temperature, and a second heating mechanism that puts the second branch flow passage at a second heating temperature.

8. A chemical analysis apparatus (1, 10), comprising:
a flow passage (20), through which a reaction fluid containing a sample containing a nucleic acid and a reagent being mixed with the sample flows, the flow passage including
a flow passage branch portion (203; 206), at which the flow passage branches into a plurality of branch flow passages (204; 207),
a junction portion (205; 208), at which the plurality of branch flow passages (204; 207) join together,
a joined flow passage, through which the reaction fluid as joined is conducted, and
a detection part (2145) that detects the nucleic acid in the reaction fluid conducted to the joined flow passage; and
a heating mechanism (30) having a plurality of set temperature zones (300, 301; 302, 303) provided on the branch flow passages (204; 207), wherein the heating mechanism is formed such that the branch flow passages (204; 207) repeatedly pass through the plurality of set temperature zones (300, 301; 302, 303).

9. Nucleic-acid amplifying method comprising:
a branch step for branching a reaction fluid containing a sample containing a nucleic acid and a reagent being mixed with the sample,
a repeated heating and cooling step for repeatedly heating and cooling the branched reaction fluid parts between a plurality of set temperatures, and
a junction step for joining the plurality of branched reaction fluid parts that have been repeatedly heated and cooled.

10. Nucleic-acid amplifying method, preferably according to claim 9, comprising:
a first branch step for branching a reaction fluid containing a sample containing a nucleic acid and a reagent being mixed with the sample,
a first repeated heating and cooling step for repeatedly heating and cooling the branched reaction fluid parts between a plurality of set temperatures,
a first joining step for joining the plurality of branched reaction fluid parts that have been repeatedly heated and cooled,
a second branch step for branching the joined reaction fluid again,
a second repeated heating and cooling step for repeatedly heating and cooling the reaction fluid parts, that have branched in the second branch step, between a plurality of set temperatures, and
a second joining step for joining a plurality of the branched reaction fluid parts that have been repeatedly heated and cooled in the second repeated heating and cooling step.

11. Nucleic-acid amplifying method according to claim 10, wherein the number of times, at which heating is repeated in the second repeated heating and cooling step, is made larger than the number of times, at which heating is repeated in the first repeated heating and cooling step.
